Europäisches Patentamt

(19) European Patent Office

Office européen des brevets

(11) Numéro de publication: **0 222 662**
**B1**

(12) **FASCICULE DE BREVET EUROPEEN**

(45) Date de publication du fascicule du brevet:
20.12.89

(21) Numéro de dépôt: **86402435.1**

(22) Date de dépôt: **30.10.86**

(51) Int. Cl.⁴: **B25J 15/02**

(54) **Dispositif perfectionné de pince ou main de robot.**

(30) Priorité: **07.11.85 FR 8516492**

(43) Date de publication de la demande:
**20.05.87 Bulletin 87/21**

(45) Mention de la délivrance du brevet:
**20.12.89 Bulletin 89/51**

(84) Etats contractants désignés:
**AT BE CH DE ES GB GR IT LI NL SE**

(56) Documents cités:
**EP-A- 0 162 439**
**FR-A- 2 515 083**
**GB-A- 2 147 268**
**US-A- 4 421 451**

**IBM TECHNICAL DISCLOSURE BULLETIN,**
**vol. 27, no. 12, mai 1985, pages 6857-6858, New York,**
**US; "Robotic adapter"**

(73) Titulaire: **SOCIETE INDUSTRIELLE DE BASSE NORMANDIE, Vaux-sur-Aure, F-14400 Bayeux(FR)**

(72) Inventeur: **Tabeau, Guy, Barbeville, F-14400 Bayeux(FR)**

(74) Mandataire: **Orès, Bernard et al, Cabinet ORES 6, Avenue de Messine, F-75008 Paris(FR)**

## Description

L'invention a pour objet un dispositif perfectionné de pince ou main de robot.

Elle vise, notamment, un tel dispositif destiné à être interposé entre des organes de préhension proprement dits, comme des "doigts" et un organe quelquefois dénommé "poignet" et qui est lui-même relié à un "bras" d'un robot industriel.

On connaît déjà, par exemple par WO 83/00651, ou WO 83/00652 ou encore par WO 84/00713 des mains pour robot industriel. Celles-ci sont d'une structure générale relativement complexe et, en outre, prévues pour répondre à un besoin donné, c'est-à-dire qu'elles n'offrent que peu ou pas de possibilités de modification et/ou d'adaptation.

C'est, d'une façon générale, un but de l'invention de fournir un tel dispositif de pince ou main de robot, lequel puisse facilement être adapté à différents types de bras ou poignets de robots industriels.

C'est, aussi, un but de l'invention de fournir un tel dispositif de pince ou main aisément modifiable et ainsi propre à permettre la préhension par ses doigts d'objets de dimensions et/ou de formes différentes.

C'est, encore, un but de l'invention de fournir un tel dispositif de grande fiabilité et, cependant, d'un coût plus réduit que celui des dispositifs complexes connus.

Un dispositif de pince ou main selon l'invention, destiné à former l'extrémité du poignet ou du bras d'un robot ou engin robotisé, et qui comprend des organes de préhension ou "doigts" ainsi que des moyens de commande de l'écartement et/ou du rapprochement entre eux desdits organes de préhension est caractérisé en ce qu'il est constitué par l'assemblage entre elles de deux parties identiques avec interposition entre lesdites parties d'une pièce intermédiaire dans laquelle sont prévus des moyens pour la liaison desdites parties à au moins une source d'énergie motrice comme de l'air comprimé, de l'huile ou tout autre fluide approprié.

Dans une forme de réalisation préférée, chacune desdites parties comporte un dispositif à cylindre et piston, le piston étant soumis à l'action dudit fluide moteur et portant une crémaillère qui coopère avec un pignon denté solidaire d'un arbre sur lequel est fixé un desdits organes de préhension.

Dans une réalisation avantageuse, la position angulaire de l'arbre dont est solidaire le pignon est déterminée par coopération de moyens qu'il porte à l'une de ses extrémités avec des capteurs solidaires d'une desdites parties.

L'invention sera mieux comprise par la description qui suit, faite à titre d'exemple et en référence au dessin annexé dans lequel :

- la figure 1 est une vue partie en coupe et partie en élévation d'un dispositif perfectionné selon l'invention ;
- la figure 2 en est une vue de dessus ;
- la figure 3 est une vue en coupe selon la ligne 3 - 3 de la figure 2 ;
- la figure 4 est une vue en bout correspondante ;

- la figure 5 est une vue très schématique illustrant l'utilisation d'un dispositif selon l'invention.

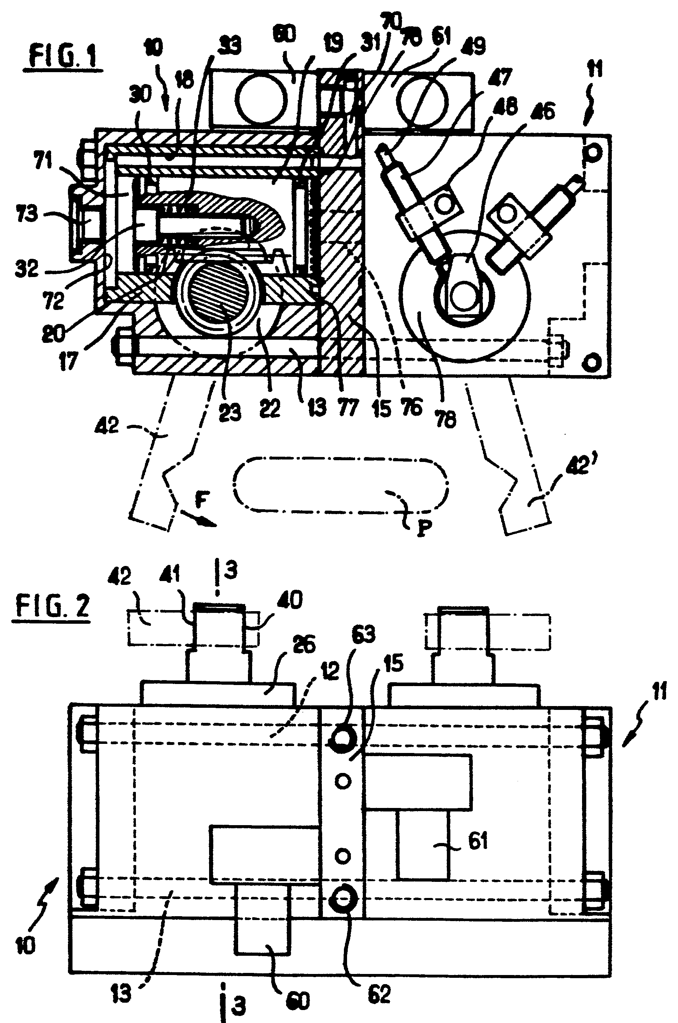

Un dispositif de pince ou main de robot selon l'invention comprend essentiellement, figures 1 et 2, deux parties identiques 10 et 11 destinées à être réunies à l'aide de trois tirants 12, 13 et 14 (avantageusement disposés aux sommets d'un triangle équilatéral) avec interposition entre elles d'une pièce intermédiaire 15.

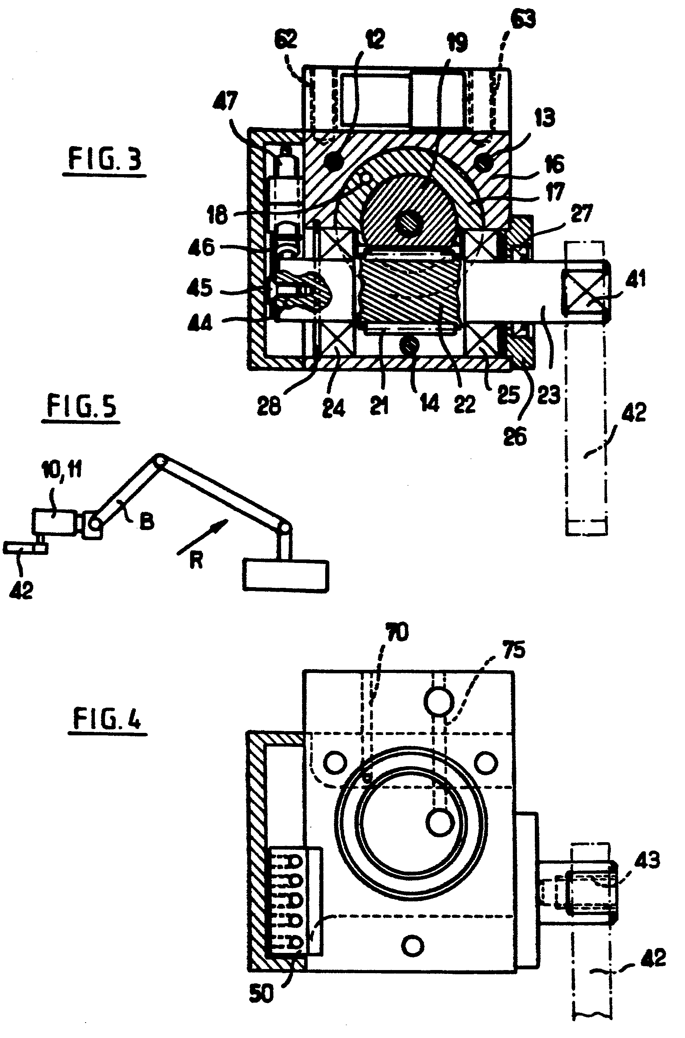

Comme bien visible sur les figures 1 et 3, chacune des pièces 10, 11 est constituée par un bloc de forme générale parallélépipédique, 16, dans lequel est montée une chemise tubulaire cylindrique 17 percée d'un forage longitudinal 18. Dans la chemise 17 est monté à coulissement un piston 19 conformé entre ses faces frontales d'extrémité suivant une crémaillère 20 laquelle engrène avec la denture 21 d'un pignon 22 d'axe orthogonal à celui du piston et qui est solidaire d'un arbre 23 monté à rotation dans le bloc 16 par l'intermédiare de roulements 24 et 25 (figure 3). Le roulement 24 est maintenu en position par un circlips 28 et le roulement 25 par une bague 26 à joint à lèvre 27.

Au voisinage de chacune de ses faces frontales d'extrémité le piston 19 est muni de joints à lèvre 30 et 31, respectivement, l'amplitude de coulissement du piston pouvant être ajustée par une butée 32 de position axiale réglable par rapport au corps du cylindre. Le réglage s'effectue par vissage de la tête d'actionnement de la butée 32, contre l'action d'un ressort 33 interposé entre le fond d'une creusure du corps de piston et ladite tête d'actionnement.

L'extrémité de l'arbre 23 qui fait saillie hors du bloc 16, au voisinage de la bague 26, porte deux méplats opposés 40 et 41 de positionnement d'un organe ou doigt de préhension 42 lequel est rendu solidaire dudit arbre par des moyens de vis, non représentés, propres à coopérer avec un trou borgne taraudé 43, figure 4.

L'autre extrémité de l'arbre 23 est également percée d'un trou borgne taraudé 44, figure 3 , dans lequel pénètre une vis 45 de fixation d'un repère 46 prévu pour coopérer avec des capteurs comme 47 fixés sur le bloc 16 par des pattes 48, les sorties 49 des capteurs 47 aboutissant à un bloc 50, figure 4, de raccord à des moyens de commande et/ou de contrôle et/ou de régulation, non représentés.

Comme indiqué ci-dessus, une pince ou main de robot selon l'invention résulte de l'assemblage entre elles de deux parties 10 et 11 identiques avec interposition entre elles d'une pièce intermédiaire 15. Celle-ci est sous forme d'une plaque épaisse, figures 1 à 4, dont les dimensions correspondent sensiblement à celles des blocs constitutifs des pièces 10 et 11, avec toutefois, en saillie par rapport auxdites pièces lorsqu'elles sont assemblées, deux embouts 60 et 61 de liaison à une source de fluide moteur, comme de l'air comprimé, de l'huile, ou tout autre fluide approprié.

Celui-ci est acheminé soit par un premier forage 70 de la pièce 15 et le forage longitudinal 18 de la chemise 17 dans une première chambre 71, -limitée par la paroi interne de la chemise 17, une face frontale d'extrémité du piston 19 et la face 72 fermée par un bouchon 73 du corps 16-, soit par une seconde entrée 75 et un forage longitudinal 76 à une seconde chambre limitée par l'autre face frontale du piston, la paroi interne de la chemise 17 et une face frontale de la pièce intermédiaire 15, l'étanchéité étant assurée par des joints toriques comme 77 et 78 interposés entre les blocs 10 et 11 et ladite pièce intermédiaire 15.

Cette dernière, qui présente des passages pour les tirants 12, 13 et 14 comporte aussi des forages borgnes taraudés 62 et 63 pour la fixation de la pince ou main au bras B d'un robot industriel ou autre engin robotisé tel que montré schématiquement en R sur la figure 5.

Le fonctionnement d'un dispositif selon l'invention résulte immédiatement de ce qui précède.

Lorsque, à partir de la condition des doigts montrée en 42 et 42' sur la figure 1 on souhaite que la main saisisse une pièce P, le fluide moteur est introduit dans les chambres appropriées comme 71 des chemises 17 de chacune des pièces 10 et 11 pour provoquer le déplacement des pistons 19 dans la direction qui entraîne en rotation les pignons 22, et par suite les arbres 23 dans le sens montré par la flèche F (figure 1)c'est-à-dire le sens qui est celui du rapprochement des extrémités libres des doigts 42, 42'. Ce mouvement est poursuivi jusqu'à ce que la pièce P soit saisie, cette prise étant avantageusement détectée par l'intermédiaire du ou des organes 46 coopérant avec les capteurs 47.

Après que la pièce P ait été déplacée par le bras B ou l'ensemble R du robot, et qu'il est souhaité que la prise soit relâchée, l'introduction de fluide moteur dans celles des chambres comme 71 mentionnées ci-dessus est interrompue et le fluide est amené sur les faces des pistons 19 opposées à celles préalablement considérées. Il s'ensuit un déplacement de translation des pistons 19 en sens opposé à celui évoqué ci-dessus et, par coopération des crémaillères 20 et des pignons 22, un mouvement de rotation des arbres 23 en sens inverse de celui décrit ci-dessus, c'est-à-dire un pivotement des doigts 42 et 42' qui libère la pièce P, la fin de ce mouvement de pivotement étant avantageusement commandée à partir des capteurs 47 avec lesquels coopèrent les organes comme 46.

Un dispositif selon l'invention peut être facilement réglé en ce qui concerne l'entraxe des arbres porte-doigts par une simple modification de l'épaisseur de la pièce intermédiaire 15, de sorte qu'une multiplicité de dispositifs à entraxes différents peut être obtenue à l'aide des mêmes pièces 10 et 11 que l'on assemble entre elles avec interposition de pièces intermédiaires 15 d'épaisseurs différentes.

Ainsi que cela ressort de ce qui précède, l'invention ne se limite nullement à ceux de ses modes de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, des revendications à présent.

## Revendications

1. Dispositif de pince ou main de robot destiné à équiper l'extrémité du poignet ou du bras d'un robot industriel ou engin robotisé, comportant des organes de préhension ou doigts ainsi que des moyens de commande de l'écartement et/ou du rapprochement entre eux desdits organes de préhension, caractérisé en ce qu'il est constitué par l'assemblage entre elles de deux parties identiques (10, 11) avec interposition entre lesdites parties d'une pièce intermédiaire (15) dans laquelle sont prévus des moyens(60, 61, 70, 75, ...) pour la liaison desdites parties (10, 11) à au moins une source d'énergie motrice comme de l'air comprimé, de l'huile, ou tout autre fluide approprié.

2. Dispositif selon la revendication 1 caractérisé en ce que chacune desdites parties (10, 11) comporte un dispositif à cylindre (17) et piston (19) sur lequel est propre à s'exercer l'action du fluide de commande (air comprimé, huile ou autre fluide approprié), ledit piston (19) étant partiellement conformé suivant une crémaillère (20) qui coopère avec un pignon (22) solidaire d'un arbre (23) sur lequel est fixé un desdits organes de préhension (42, 42').

3. Dispositif selon la revendication 2, caractérisé en ce que l'arbre (23) dont est solidaire le pignon (22) porte à l'une de ses extrémités des moyens (46) propres à coopérer avec des capteurs (47) pour la détermination de la position angulaire dudit arbre (23).

4. Dispositif selon l'une quelconque des revendications précédentes, caractérisé en ce que les deux parties identiques entre elles (10, 11) et la pièce intermédiaire (15) sont assemblées à l'aide de tirants (12, 13, 14).

5. Dispositif selon l'une quelconque des revendications précédentes, caractérisé en ce que le piston (19) monté à coulissement dans le cylindre ou chemise (17)est muni de moyens de réglage de l'amplitude de son déplacement de translation.

6. Robot industriel ou engin robotisé, caractérisé en ce qu'il comporte une main ou pince de préhension selon l'une quelconque des revendications précédentes.

## Patentansprüche

1. Roboterzange oder Roboterhandeinrichtung, die zum Ausrüsten des äußersten Handgelenk- oder Armendes eines Industrieroboters oder einer Robotermaschine bestimmt ist, mit Greiforganen oder Fingern sowie Steuermitteln zum gegenseitigen Spreizen und/oder Zusammendrücken der Greiforgane, dadurch gekennzeichnet, daß sie durch den Zusammenbau zweier untereinander identischer Teile (10, 11) mit Einfügen eines Zwischenstückes (15) zwischen die Teile ausgebildet ist, in dem Mittel (60, 61, 70, 75, ...) zum Verbinden der Teile (10, 11) mit zumindest einer motorischen Energiequelle, wie Druckluft, Öl oder eines jeden anderen geeigneten Fluidums vorgesehen sind.

2. Einrichtung nach Anspruch 1, dadurch gekennzeichnet, daß jeder der Teile (10, 11) aus einer Zylindereinrichtung (17) und einer Kolbeneinrichtung (19)

besteht, auf welche die Wirkung der Steuerflüssigkeit (Druckluft, Öl oder anderen geeigneten Fluidums) geeignet ausgeübt werden kann, wobei der Kolben (19) teilweise gemäß einer Zahnstange (20) ausgebildet ist, die mit einem Ritzel (22) zusammenwirkt, das mit einer Welle (23) verbunden ist, an der die Greiforgane (42, 42') angebracht sind.

3. Einrichtung nach Anspruch 2, dadurch gekennzeichnet, daß die Welle (23), mit welcher das Ritzel (22) verbunden ist, an einem ihrer äußersten Enden die Mittel (46) trägt, die zum Zusammenwirken mit Sensoren (47) für die Bestimmung der Winkellage der Welle (23) geeignet sind.

4. Einrichtung nach einem der vorhergehenden Ansprüche, dadurch gekennzeichnet, daß die zwei untereinander identischen Teile (10, 11) und das Zwischenstück (15) mit Hilfe von Zugstangen (12, 13, 14) zusammengebaut sind.

5. Einrichtung nach einem der vorhergehenden Ansprüche, dadurch gekennzeichnet, daß der Kolben (19), der gleitend in dem Zylinder oder Mantel (17) montiert ist, mit Einstellmitteln für die Amplitude seiner Translationsverschiebung versehen ist.

6. Industrieroboter oder Robotermaschine, dadurch gekennzeichnet, daß er oder sie aus einer Greifhand oder Greifzange nach irgendeinem der vorhergehenden Ansprüche besteht.


**Claims**

1. A robot hand or gripping device intended to equip the end of the arm or the wrist of an industrial robot or robotized appliance, comprising grasping members or fingers and means for controlling the movements of said grasping members apart from one another and close to one another, characterized in that it is made by assembly to one another of two identical parts (10, 11) with interposition between said parts of an intermediate piece (15) in which are provided means (60, 61, 70, 75 ...) for connecting said parts (10, 11) to at least one drive-energy source, such as compressed air, oil and the like suitable fluid.

2. The device as claimed in claim 1, wherein each of said parts (10, 11) comprises a piston (19)-cylinder (17) type device on which acts the control fluid of said energy-source (compressed air, oil or the like suitable fluid), said piston (19) being partially shaped as a rack (20) interacting with a pinion (22) fixed to a shaft (23) onto which is fastened one of said grasping members (42, 42').

3. The device as claimed in claim 2, wherein the shaft (23) to which is fixed the pinion (22) carries at one of its ends means (46) designed to interact with sensors (47) for determining the angular position of said shaft (23).

4. The device as claimed in any of the preceding claims, wherein the two parts identical to one another (10, 11) and the intermediate piece (15) are assembled together by the rods (12, 13, 14) .

5. The device as claimed in any of the preceding claims, wherein the piston (19) slidably mounted in the cylinder or skist (17) is equipped with means for adjusting the amount of its translational movement.

6. An industrial robot or robotized appliance characterized in that it comprises a gripping device or hand as claimed in any one of the preceding claims.

FIG.1

FIG.2

FIG. 3

FIG. 5

FIG. 4